# EUROPÄISCHE PATENTANMELDUNG

(11) **EP 1 026 568 A2**
(43) Veröffentlichungstag der Anmeldung: **09.08.2000**
(21) Anmeldenummer: 99440360.8
(22) Anmeldetag: 20.12.1999
(51) Int. Cl.: G05F 1/46, H02M 3/335

(54) **Schaltnetzteil**

(30) Priorität: 13.01.1999 DE 19900920
(71) Anmelder: ALCATEL, 75008 Paris (FR)
(72) Erfinder: Telefont, Heinz, 3500 Krems/Egelsee (AT)
(74) Vertreter: Brose, Gerhard, Dipl.-Ing.

(57) **Zusammenfassung**

Ein Schaltnetzteil (1), das einen Durchflußwandler mit einem Taktgenerator (2) und einem Transformator (8) mit einem Kern (9), einer Sekundärwicklung (12) und einer Primärwicklung (10), die im Gegentaktbetrieb (Push-Pull-Betrieb) mit einer Betriebsspannung beaufschlagt wird, enthält, wobei ein die Betriebsspannung des Durchflußwandlers führender Betriebsspannungsanschluß (21) mit einem Versorgungsspannungsanschluß (30) des Schaltnetzteils (1) gekoppelt ist, der an eine Versorgungsspannung für das Schaltnetzteil anzuschließen ist, ist dadurch gekennzeichnet, daß in den Weg vom Versorgungsspannungsanschluß (30) zum Betriebsspannungsanschluß (21) ein steuerbares, vorzugsweise elektronisches, Schalterelement (FET 24) eingeschaltet ist, das derart zwischen einem Sperrzustand und einem verlustarmen leitenden Zustand schaltbar ist, daß die Betriebsspannung auch bei unterschiedlichen Versorgungsspannungen innerhalb gewünschter Grenzen konstant gehalten ist. Das Schaltnetzteil kann an unterschiedliche Versorgungsspannungen angeschlossen werden und hat einen ausreichend hohen Wirkungsgrad.

## Beschreibung

Die Erfindung betrifft ein Schaltnetzteil, das einen Durchflußwandler mit einem Taktgenerator und einem Transformator mit einem Kern, einer Sekundärwicklung und einer Primärwicklung, die im Gegentaktbetrieb (Push-Pull-Betrieb) mit einer Betriebsspannung beaufschlagt wird, enthält, wobei ein die Betriebsspannung des Durchflußwandlers führender Betriebsspannungsanschluß mit einem Versorgungsspannungsanschluß des Schaltnetzteils gekoppelt ist, der an eine Versorgungsspannung für das Schaltnetzteil anzuschließen ist.

Bekannte derartige Schaltnetzteile mit Gegentakt-Durchflußwandler (Push-Pull-Wandler) liefern an der Sekundärwicklung eine Sekundärspannung, die sich aus der an der Primärwicklung anliegenden Primärspannung durch Multiplikation mit dem Wicklungsverhältnis ergibt. Wenn gewünscht wird, daß die Sekundärspannung innerhalb vorgegebener Grenzen konstant ist, muß auch die Primärspannung entsprechend konstant sein, die bisher gleich der Versorgungsspannung des gesamten Schaltnetzteils ist. Soll die gleiche Sekundärspannung bei unterschiedlichen Versorgungsspannungen erzeugt werden, so müssen unterschiedliche Schaltnetzteile verwendet werden.

Der Erfindung liegt die Aufgabe zugrunde, ein Schaltnetzteil zu entwerfen, das für unterschiedliche Versorgungsspannungen geeignet ist.

Diese Aufgabe wird gemäß der Erfindung dadurch gelöst, daß in den Weg vom Versorgungsspannungsanschluß zum Betriebsspannungsanschluß ein steuerbares, vorzugsweise elektronisches, Schalterelement eingeschaltet ist, das derart zwischen einem Sperrzustand und einem verlustarmen leitenden Zustand schaltbar ist, daß die Betriebsspannung auch bei unterschiedlichen Versorgungsspannungen innerhalb gewünschter Grenzen konstant gehalten ist.

Bei der Erfindung ist von Vorteil, daß beginnend bei einer zulässigen kleinsten Versorgungsspannung, bei der das Schalterelement dauernd leitend ist, auch höhere Versorgungsspannungen zulässig sind, wobei das Schalterelement bei steigender Versorgungsspannung für immer länger werdende Zeiten gesperrt wird, so daß hierdurch der Zufluß elektrischer Energie zum Durchflußwandler verringert wird. Das Schaltnetzteil kann an unterschiedliche Versorgungsspannungen angeschlossen werden. Das Schalterelement verursacht bei geeigneter Wahl wenig Verluste, so daß das Schaltnetzteil einen ausreichend hohen Wirkungsgrad hat. Vorzugsweise handelt es sich um ein Halbleiter-Schalterelement, das zwischen Sperrzustand und Sättigungsbetrieb geschaltet wird, besonders bevorzugt um einen FET.

Bei einer Ausführungsform der Erfindung ist ein Steueranschluß des Schalterelements mit einem Ausgang eines Impulsgenerators gekoppelt, der in Abhängigkeit von der Betriebsspannung das Schalterelement derart leitend steuert oder sperrt, daß die Betriebsspannung auch bei unterschiedlichen Versorgungsspannungen innerhalb der gewünschten Grenzen konstant gehalten wird.

Bei einer Ausführungsform der Erfindung ist vorgesehen, daß der Impulsgenerator ein Impulsbreiten-Modulations-Wandler ist. Dadurch läßt sich die Regelung der Betriebsspannung besonders einfach erreichen.

Bei einer Ausführungsform der Erfindung ist ein Speicherkondensator an Leitungen, die die Betriebsspannung führen, angeschlossen. Dieser liefert elektrische Energie während der Sperrzeiten des Schalterelements.

Bei Ausführungsformen der Erfindung ist zwischen dem oben genannten Betriebsspannungsanschluß und dem Schalterelement eine Drossel eingeschaltet, und der Verbindungspunkt der Drossel mit dem Schalterelement ist über eine Freilaufdiode mit dem Speicherkondensator verbunden.

Hier wird in vorteilhafter Weise durch die Drossel dafür gesorgt, daß das Schalterelement beim Schalten in den leitenden Zustand und beim Einschalten des Schaltnetzteils nicht an der vollen Versorgungsspannung anliegt, was zu einem Ausfall führen könnte. Die Freilaufdiode schützt das Schalterelement beim Übergang in den gesperrten Zustand vor einer hohen Selbstinduktionsspannung der Drossel und speist deren gespeicherte Energie in den Speicherkondensator ein.

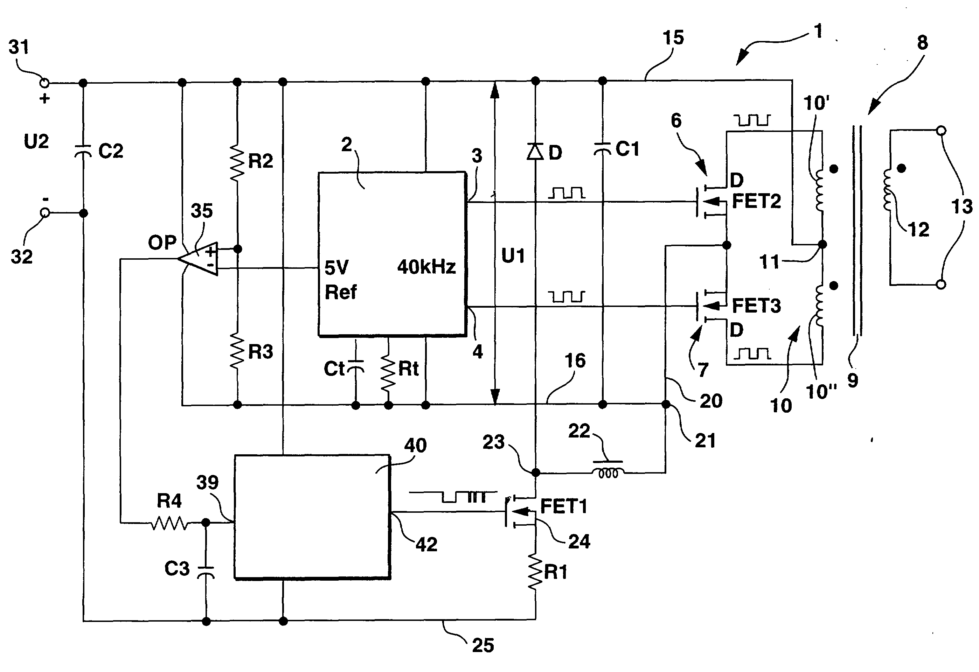

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Die einzige Figur zeigt ein Ausführungsbeispiel einer erfindungsgemäßen Schaltung.

Im Schaltnetzteil 1 liefert ein Taktgenerator 2 mit Gegentaktausgängen 3 und 4 im Gegentakt zueinander stehende Rechteck-Impulsfolgen an die Steuerelektroden von zwei elektronischen Schalterelementen, die durch FETs 6 und 7 gebildet sind. Ein Transformator 8 weist einen Ferritkern 9 mit einer unterteilten Primärwicklung 10 mit Wicklungshälften 10', 10" und einer zwischen diesen vorhandenen Mittelanzapfung 11 und einer Sekundärwicklung 12 auf, an deren Ausgängen 13 die Ausgangswechselspannung des Schaltnetzteils zur Verfügung steht. Die Mittelanzapfung 11 ist mit einer Leitung 15 verbunden, an der im Betrieb die positive Polarität einer Betriebsspannung U1 anliegt, deren negative Polarität an einer Leitung 16 anliegt. Die Drain-Elektrode jedes der FETs 6 und 7 ist mit je einem freien Ende der beiden Wicklungshälften 10', 10" verbunden. Der Source-Anschluß beider FETs 6 und 7 ist mit einer Leitung 20 verbunden, die über eine Drossel 22 mit Ferritkern und über einen FET 24 und einen Widerstand R1 sowie über eine Leitung 25 mit dem negativen Anschluß 30 für eine Versorgungsspannung in Verbindung ist, deren positiver Pol mit einem Anschluß 31 zu verbinden ist, der mit der Leitung 15 unmittelbar in Verbindung steht. Zwischen den Leitungen 15 und 16 ist ein Kondensator C1 eingeschaltet, und zwischen den Anschlüssen 30 und 31 ist ein Kondensator C2 eingeschaltet, die beide zur Glättung der Spannung dienen.

Beim niedrigsten Wert, den U2 für einen zuverlässigen Betrieb der Schaltung haben darf, ist der FET 24 ständig niederohmig durchgeschaltet, er befindet sich im Sättigungszustand. Der Stromverlauf geht vom Anschluß 31 über die Leitung 15 zur Mittelanzapfung 11, von dort abwechselnd über die Wicklungshälfte 10' und den FET 6 oder über die Wicklungshälfte 10'' und den FET 7 zur Leitung 20 und von dieser zum Anschluß 30. Im Beispiel hat dabei die Spannung U1 einen Wert von 20V. Diese Spannung U1 dient unter anderem auch als Betriebsspannung für den Taktgenerator 2.

Wenn die Versorgungsspannung U2 ansteigt, so steigt auch die Spannung U1 an. Dieser Anstieg wird von einem Operationsverstärker 35 erfaßt. Einem von dessen Anschlüssen wird über einen Spannungsteiler aus den Widerständen R2 und R3 eine der Spannung Ul proportionale Spannung zugeführt. Dem anderen Eingang des Operationsverstärker 35 wird von einem Ausgang des Taktgenerators 2 eine Referenzspannung von 5V zugeführt. Der Ausgang des Operationsverstärker 35 ist über eine Kombination aus einem Serienwiderstand R4 und einem Kondensator C3 mit einem Regeleingang 39 eines Impulsbreiten-Modulations-Wandlers 40 verbunden. Dieser gibt dann, wenn die Spannung U1 über die genannten 20V ansteigt, an einem Ausgang 42 eine Impulsfolge aus, die den FET 24 jeweils für kurze Zeit sperrt. Die im Augenblick des Sperrens in der Drossel 22 vorhandene magnetische Energie lädt über eine Freilaufdiode D den Kondensator C1 auf. Die Freilaufdiode D schützt den FET 24 vor einer zu hohen Spannung. Wenn der FET 24 gesperrt ist, nimmt die Spannung U1 ab, weil der Taktgenerator 2 weiterhin in Betrieb ist und der Transformator 8 weiterhin Wechselspannungsenergie abgibt; beide werden dabei vom Kondensator C1 gespeist. Wenn die Spannung U1 abnimmt, so werden die Zeiten, in denen der FET 24 gesperrt ist, verringert, erforderlichenfalls wird er nicht mehr gesperrt.

Auf diese Weise wird in weiten Grenzen unabhängig von der Höhe der Versorgungsspannung U2 die Betriebsspannung U1 weitgehend konstant gehalten. In einem Ausführungsbeispiel war es möglich, die Versorgungsspannung U2 in einem Bereich zwischen 20V und 70V einzustellen, ohne daß die Ausgangsspannung an den Anschlüssen 13 sich wesentlich änderte.

Der Taktgenerator 2 enthält im Beispiel eine integrierte Schaltung vom Typ SG3525A der Firma SGS Thomson und arbeitet mit einer Frequenz von 40 kHz, die durch die Beschaltung mit einem Widerstand Rt und einem Kondensator Ct eingestellt wird. Der Impulsbreiten-Modulations-Wandler 40 enthält im Beispiel eine integrierte Schaltung vom Typ CD4093B. Er arbeitet ebenfalls (obwohl dies nicht zwingend notwendig ist) bei 40 kHz Impulsfolgefrequenz. Derartige Schaltungen sind gut bekannt. Die FETs 6, 7 und 24 sind MOSFETs vom Typ IRF640 von SGS Thomson.

Der FET 24 wird nur zwischen dem vollständig gesperrten Zustand und dem niederohmigen (gesättigten) Zustand geschaltet. Daher sind seine Verluste niedrig und der Wirkungsgrad der gesamten Schaltung ist hoch.

Der Impulsbreiten-Modulations-Wandler 40 mag eine konstante Frequenz haben, oder in der Frequenz variieren. Für die Funktion der Erfindung ist seine Frequenz nicht wichtig. Im Beispiel ändert sich die Frequenz etwas in Abhängigkeit von der Betriebsspannung.

## Patentansprüche

1. Schaltnetzteil (1), das einen Durchflußwandler mit einem Taktgenerator (2) und einem Transformator (8) mit einem Kern (9), einer Sekundärwicklung (12) und einer Primärwicklung (10), die im Gegentaktbetrieb (Push-Pull-Betrieb) mit einer Betriebsspannung beaufschlagt wird, enthält, wobei ein die Betriebsspannung des Durchflußwandlers führender Betriebsspannungsanschluß (21) mit einem Versorgungsspannungsanschluß (30) des Schaltnetzteils (1) gekoppelt ist, der an eine Versorgungsspannung für das Schaltnetzteil anzuschließen ist,
dadurch gekennzeichnet, daß in den Weg vom Versorgungsspannungsanschluß (30) zum Betriebsspannungsanschluß (21) ein steuerbares, vorzugsweise elektronisches, Schalterelement (FET 24) eingeschaltet ist, das derart zwischen einem Sperrzustand und einem verlustarmen leitenden Zustand schaltbar ist, daß die Betriebsspannung auch bei unterschiedlichen Versorgungsspannungen innerhalb gewünschter Grenzen konstant gehalten ist.

2. Schaltnetzteil (1) nach Anspruch 1, dadurch gekennzeichnet, daß ein Steueranschluß des Schalterelements (FET 24) mit einem Ausgang eines Impulsgenerators gekoppelt ist, der in Abhängigkeit von der Betriebsspannung das Schalterelement derart leitend steuert oder sperrt, daß die Betriebsspannung auch bei unterschiedlichen Versorgungsspannungen innerhalb der gewünschten Grenzen konstant gehalten wird.

3. Schaltnetzteil (1) nach Anspruch 3, dadurch gekennzeichnet, daß der Impulsgenerator ein Impulsbreiten-Modulations-Wandler (42) ist.

4. Schaltnetzteil nach einem der Ansprüche 1 bis 3, dadurch gekennzeichnet, daß ein Speicherkondensator (C1) an Leitungen (15, 16), die die Betriebsspannung führen, angeschlossen ist.

5. Schaltnetzteil nach Anspruch 4, dadurch gekennzeichnet, daß zwischen dem genannten Betriebsspannungsanschluß (21) und dem Schalterelement (FET 24) eine Drossel (22) eingeschaltet ist, und daß der Verbindungspunkt (23) der Drossel (22) mit dem Schalterelement (FET 24) über eine Freilaufdiode (D) mit dem Speicherkondensator (C1) verbunden ist.
